(19) Europäisches Patentamt
European Patent Office
Office européen des brevets

(11) **EP 4 414 915 A1**

(12) **EUROPEAN PATENT APPLICATION**

(43) Date of publication:
**14.08.2024 Bulletin 2024/33**

(21) Application number: **24153605.1**

(22) Date of filing: **24.01.2024**

(51) International Patent Classification (IPC):
***G06Q 10/0639*** (2023.01)

(52) Cooperative Patent Classification (CPC):
**G06Q 10/0639**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 IN 202321008585**

(71) Applicant: **Tata Consultancy Services Limited Maharashtra (IN)**

(72) Inventors:
• **RAVAT, AMMAR ZOHER**
**400 607 Thane West, Maharashtra (IN)**

• **SINHA, SANKET**
**411006 Pune, Maharashtra (IN)**
• **VARHADPANDE, SARANG PADMANABH**
**411028 Pune, Maharashtra (IN)**
• **BANERJEE, SHOUVIK**
**400 607 Pune, Maharashtra (IN)**
• **CHAUGULE, ANISH DILIP**
**411057 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **MULTI-LEVEL RELIABILITY ASSESSMENT OF VENDORS BASED ON MULTI-DIMENSIONAL RELIABILITY SCORE**

(57)    State of art techniques apply a mix of KPIs, rules and isolated machine learning algorithms to evaluate a vendor, interchangeably referred to as supplier, for vendor risk that may disrupt the supply chain. However, there is no single method that blends internal and external data points. Embodiments of the present disclosure provide a method and system for multi-level reliability assessment of vendors based on multi-dimensional reliability score by performing data analytics on vendor data. The holistic multi-dimensional reliability score aggregates multiple, multi-dimensional scores for a supplier generated at item, item category, department and organizational level using internal and external vendor data. These scores uncover hidden patterns present in various aspects of transaction of a supplier with the organization as well as external aspects of a supplier such as financial health, environmental impact and market sentiment related to the supplier.

FIG. 1B

**Description**

CROSS-REFERENCE TO RELATED APPLICATIONS AND PRIORITY

The present application claims priority to Indian application no. 202321008585, filed on February 9, 2023.

TECHNICAL FIELD

The embodiments herein generally relate to the field of data analytics and, more particularly, to a method and system for multi-level reliability assessment of vendors based on multi-dimensional reliability score by performing data analytics on vendor data to derive insights on vendor reliability.

BACKGROUND

Supply chains typically include multiple partners, with services and sourcing managed across several organizations and in jurisdictions across the world. These partners are tied together in a complex business ecosystem and the extent and complexity of recent sourcing arrangements has increased the likelihood of risks. There always exists certain risks associated with suppliers, also referred to as vendors. Suppliers or vendors are critical players in supply chain of an organization or entity and have to be managed smartly. Visibility of supplier networks, financial, ethical, social, and environmental performance, need for assurance around legal and statutory compliance, and confidence in handling a supply chain disruption, are risks associated with a vendor. In supply chains, while there is consensus that supplier relationship and mitigating associated risk has key value across the supply chain networks, most organizations struggle to define a strategic supplier for their organization and to have an objective assessment of their suppliers to calibrate their supplier relationships.

Currently, identifying a reliable vendor requires manual intervention. This obviously introduces bias, time delay, hectic analysis for identifying a right vendor or strategic supplier. Attempts have been made to provide automated vendor selection frameworks. However, every factor small or big if missed out can affect the vendor selection with undesired results, not in favor of the entity or organization. While existing systems employ various methods to evaluate and rate suppliers, these methods rely on using one of the listed aspects such as: survey mechanism to gather feedback, internal Key Performance Indicator KPI data, subscription based services from external parties and the like. Some existing approaches apply a mix of KPIs, rules and isolated machine learning algorithms to evaluate supplier, however, there is no single method that blends internal and external data points.

SUMMARY

Embodiments of the present disclosure present technological improvements as solutions to one or more of the above-mentioned technical problems recognized by the inventors in conventional systems.

For example, in one embodiment, a method for reliability assessment of vendors is provided. The method includes obtaining vendor data comprising (i) internal data providing Purchase Order (PO) line level data details of a plurality of vendors engaged with an entity for providing a plurality of items within each of a plurality of categories identifying unique items supplied, quantities, and order dates for individual PO's, and (ii) external data associated with the plurality of vendors providing analysis of each of the plurality of vendors at global level. Further, the method includes determining vendor-to-item mapping information, vendor-to-item category mapping information and vendor to department mapping information for each of the plurality of vendors for each of the plurality of items in each of the plurality of categories by processing the vendor data post performing data validation. Further, the method includes computing a plurality of scores for each of the plurality of vendors by processing the vendor-to-item mapping information, the vendor-to-category mapping information, and the vendor to department mapping information at a plurality of levels to generate the plurality of scores at an item level, an item category level, a department level, and an entity level. The plurality of scores comprising: (a) a popularity score (POPS), indicative of a weighted combination of metrics representing popularity of a vendor in terms of a plurality of popularity features based on share of business, total volume of materials supplied, and frequency of supply, which is extracted from the internal data, wherein each of the plurality of popularity features is determined over varying time periods and uniquely combined to form a plurality of popularity features groups (FGs); (b) a pricing score (PRS), indicative of the comparative price charged by a vendor from among the plurality of vendors for an item with respect to other vendors based on a plurality of pricing features comprising (i) mean price, highest price, and lowest price of each of the plurality of vendors, (ii) volume of items supplied by each of the plurality of vendors, and (iii) total volume of items supplied by the plurality of vendors, wherein the pricing features are extracted from the internal data; (c) a timeliness score (TS) predicted by a Timeline Score (TS) model trained on a plurality of timeliness features extracted from the internal data and comprising a historical performance of a vendor and other vendors for a single item and across the plurality of items, across the plurality of levels; (d) a sustainability score (SS) obtained by integrating a plurality of sustainability sub-scores obtained for each of the plurality of vendors from the external data; (e) a financial score (FS) obtained by integrating a plurality of financial parameter scores assigned to each of the plurality of vendors, extracted from the external data; (f) a compliance score (CS) by integrating a plurality of compliance parameter scores assigned to each of the plurality of vendor, extracted from the external data; and (g) a market reputation score (MRS) derived from a sentiment score calculated from marker news information, obtained from the external data, using Natural Language Processing (NLP).

Furthermore, the method includes normalizing the plurality of scores on a predefined scale. Furthermore, the method includes dynamically assigning weightage to each of the normalized plurality of scores at each of the plurality of levels to generate a plurality of weighted scores based on one of (i) a preset weightage criteria, and (ii) dynamically defined user weights for each of the plurality of scores. Further, the method includes assessing each of the plurality of vendors by determining a multi-dimensional reliability score for each of the plurality of vendors at each of the plurality of levels by aggregating the plurality of weighted scores. Furthermore, the method includes selecting one or more vendors from the plurality of vendors for an item of interest based on a reliability score criteria in accordance with a level of interest from among the item level, the item-category level, the department level, and the organizational level.

In another aspect, a system for reliability assessment of vendors is provided. The system comprises a memory storing instructions; one or more Input/Output (I/O) interfaces; and one or more hardware processors coupled to the memory via the one or more I/O interfaces, wherein the one or more hardware processors are configured by the instructions to obtain vendor data comprising (i) internal data providing Purchase Order (PO) line level data details of a plurality of vendors engaged with an entity for providing a plurality of items within each of a plurality of categories identifying unique items supplied, quantities, and order dates for individual PO's, and (ii) external data associated with the plurality of vendors providing analysis of each of the plurality of vendors at global level. Further, the one or more hardware processors are configured to determine vendor-to-item mapping information, vendor-to-item category mapping information and vendor to department mapping information for each of the plurality of vendors for each of the plurality of items in each of the plurality of categories by processing the vendor data post performing data validation. Further, the one or more hardware processors are configured to compute a plurality of scores for each of the plurality of vendors by processing the vendor-to-item mapping information, the vendor-to-category mapping information, and the vendor to department mapping information at a plurality of levels to generate the plurality of scores at an item level, an item category level, a department level and an entity level. The plurality of scores comprising: (a) a popularity score (POPS), indicative of a weighted combination of metrics representing popularity of a vendor in terms of a plurality of popularity features based on share of business, total volume of materials supplied, and frequency of supply, which is extracted from the internal data, wherein each of the plurality of popularity features is determined over varying time periods and uniquely combined to form a plurality of popularity features groups (FGs); (b) a pricing score (PRS), indicative of the comparative price charged by a vendor from among the plurality of vendors for an item with respect to other vendors based on a plurality of pricing features comprising (i) mean price, highest price, and lowest price of each of the plurality of vendors, (ii) volume of items supplied by each of the plurality of vendors, and (iii) total volume of items supplied by the plurality of vendors, wherein the pricing features are extracted from the internal data; (c) a timeliness score (TS) predicted by a Timeline Score (TS) model trained on a plurality of timeliness features extracted from the internal data and comprising a historical performance of a vendor and other vendors for a single item and across the plurality of items, across the plurality of levels; (d) a sustainability score (SS) obtained by integrating a plurality of sustainability sub-scores obtained for each of the plurality of vendors from the external data; (e) a financial score (FS) obtained by integrating a plurality of financial parameter scores assigned to each of the plurality of vendors, extracted from the external data; (f) a compliance score (CS) by integrating a plurality of compliance parameter scores assigned to each of the plurality of vendor, extracted from the external data; and (g) a market reputation score (MRS) derived from a sentiment score calculated from marker news information, obtained from the external data, using Natural Language Processing (NLP).

Furthermore, the one or more hardware processors are configured to normalize the plurality of scores on a predefined scale. Furthermore, the one or more hardware processors are configured to dynamically assign weightage to each of the normalized plurality of scores at each of the plurality of levels to generate a plurality of weighted scores based on one of (i) a preset weightage criteria, and (ii) dynamically defined user weights for each of the plurality of scores. Further, the one or more hardware processors are configured to assess each of the plurality of vendors by determining a multi-dimensional reliability score for each of the plurality of vendors at each of the plurality of levels by aggregating the plurality of weighted scores. Further, the one or more hardware processors are configured to select one or more vendors from the plurality of vendors for an item of interest based on a reliability score criteria in accordance with a level of interest from among the item level, the item-category level, the department level, and the organizational level.

In yet another aspect, there are provided one or more non-transitory machine-readable information storage mediums comprising one or more instructions, which when executed by one or more hardware processors causes a method for reliability assessment of vendors. The method includes obtaining vendor data comprising (i) internal data providing Purchase Order (PO) line level data details of a plurality of vendors engaged with an entity for providing a plurality of items within each of a plurality of categories identifying unique items supplied, quantities, and order dates for individual PO's, and (ii) external data associated with the plurality of vendors providing analysis of each of the plurality of vendors at global level. Further, the method includes determining vendor-to-item mapping information, vendor-to-item category mapping information and vendor to department mapping information for each of the plurality of vendors for each of the plurality of items in each of the plurality of categories by processing the vendor data post performing data validation. Further, the method includes computing a plurality of scores for each of the plurality of vendors by processing the vendor-to-item mapping information, the vendor-to-category mapping information, and the vendor to department mapping information at a plurality of levels to generate the plurality of scores at an item level, an item category level, a department level and an entity level. The plurality of scores comprising: (a) a popularity score (POPS), indicative of a weighted combination of metrics representing popularity of a vendor in terms of a plurality of popularity features based on share of business, total volume of materials supplied, and frequency of supply, which is extracted from the internal data, wherein each of the plurality of popularity features is determined over varying time periods and uniquely combined to form a plurality of popularity features groups (FGs); (b) a pricing score (PRS), indicative of the comparative price charged by a vendor from among the plurality of vendors for an item with respect to other vendors based on a plurality of pricing features comprising (i) mean price, highest price, and lowest price of each of the plurality of vendors, (ii) volume of items supplied by each of the plurality of vendors, and (iii) total volume of items supplied by the plurality of vendors, wherein the pricing features are extracted from the internal data; (c) a timeliness score (TS) predicted by a Timeline Score (TS) model trained on a plurality of timeliness features extracted from the internal data and comprising a historical performance of a vendor and other vendors for a single item and across the plurality of items, across the plurality of levels; (d) a sustainability score (SS) obtained by integrating a plurality of sustainability sub-scores obtained for each of the plurality of vendors from the external data; (e) a financial score (FS) obtained by integrating a plurality of financial parameter scores assigned to each of the plurality of vendors, extracted from the external data; (f) a compliance score (CS) by integrating a plurality of compliance parameter scores assigned to each of the plurality of vendor, extracted from the external data; and (g) a market reputation score (MRS) derived from a sentiment score calculated from marker news information, obtained from the external data, using Natural Language Processing (NLP).

Furthermore, the method includes normalizing the plurality of scores on a predefined scale. Furthermore, the method includes dynamically assigning weightage to each of the normalized plurality of scores at each of the plurality of levels to generate a plurality of weighted scores based on one of (i) a preset weightage criteria, and (ii) dynamically defined user weights for each of the plurality of scores. Further, the method includes assessing each of the plurality of vendors by determining a multi-dimensional reliability score for each of the plurality of vendors at each of the plurality of levels by aggregating the plurality of weighted scores. Furthermore, the method includes selecting one or more vendors from the plurality of vendors for an item of interest based on a reliability score criteria in accordance with a level of interest from among the item level, the item-category level, the department level, and the organizational level.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system, for multi-level reliability assessment of vendors based on multi-dimensional reliability score by performing data analytics on vendor data, in accordance with some embodiments of the present disclosure.

FIG. 1B illustrates a process overview of the system of FIG. 1A, in accordance with some embodiments of the present disclosure.

FIGS. 2A through 2B (collectively referred as FIG. 2) is a flow diagram illustrating a method for multi-level reliability assessment of vendors based on multi-dimensional reliability score by performing data analytics on vendor data, using the system of FIG. 1A, in accordance with some embodiments of the present disclosure.

FIG. 3A, 3B and 3C explain the computation of popularity score (POPS) component of the multi-dimensional reliability score, in accordance with some embodiments of the present disclosure.

FIG. 4A through 4C explain the computation of pricing score (PRS) component of the multi-dimensional reliability score, in accordance with some embodiments of the present disclosure.

FIG. 5A through 5D explain the computation of timeliness score (TS) component of the multi-dimensional reliability score with an example, in accordance with some embodiments of the present disclosure.

FIG. 6 explains the computation of market reputation score (MRS) component of the multi-dimensional reliability score, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Current technology applies a mix of KPIs, rules and isolated machine learning algorithms to evaluate a vendor, interchangeably referred to as supplier, for vendor risk that may disrupt the supply chain. However, there is no single method that blends internal and external data points. Furthermore, not always is it appropriate to identify a reliable vendor at entity or organization level. The reason being performance of a vendor at specific item level, item category level, department level may be varying and these internal data points of any vendor at various levels of the entity need to be individually analyzed to find the strategic vendor, with current requirement into consideration. For example, ABC Inc., which is a renowned distributor of industrial parts, will be better at supplying cutting and hand power tools as compared to supplying raw materials like Steel. The supplier will have a higher reliability score in the category of Power Tools and will score lower in the category of Steel.

Furthermore, rather than a single perspective the vendor needs to be accessed across multiple dimensions, with varying weightage to one or more aspects based on current requirement of the entity. Thus, there is a need to establish a robust assurance mechanism for the vendor, which can cover key risks that business ecosystem of an organization or entity is exposed to.

Embodiments of the present disclosure provide a method and system for multi-level reliability assessment of vendors based on multi-dimensional reliability score by performing data analytics on vendor data. The method disclosed herein bring a paradigm-shift from using rules or an isolated machine learning algorithms to score supplier risk to a holistic reliability score which aggregates multiple, multi-dimensional scores for a supplier generated at item, item category, department and organizational level using internal and external vendor data. These scores uncover hidden patterns present in various aspects of transaction of a supplier with the organization as well as external (to organization) aspects of a supplier such as financial health, environmental impact and market sentiment related to the supplier.

The internal data is the organizational proprietary wherein the actual Purchase Order (PO) details are available. The external data is made available from multiple data providers who analyze the vendors at global level. Internal data related to vendor details, PO delivery details, PO item details are used for developing scores like popularity score, pricing score, timeliness score. However, to generate sustainability score, financial score, compliance score and market reputation score different sets of external data are required. These scores are aggregated to derive an overall multi-dimensional reliability score for the vendor or supplier.

The reliability score for a supplier generated at item, item category, department and organizational level makes the score contextual to the category or item to assist supplier selection by procurement managers. The method disclosed enables segregation of supplier performance evaluation into multiple sections, multi-factor individual score calculation using sophisticated and statistical and Machine Learning (ML) algorithms to further aggregate individual scores to generate the multi-dimensional reliability score. The approach provided herein brings in objectivity, flexibility, and completeness to the vendor assessment, with customization in reliability score assessment.

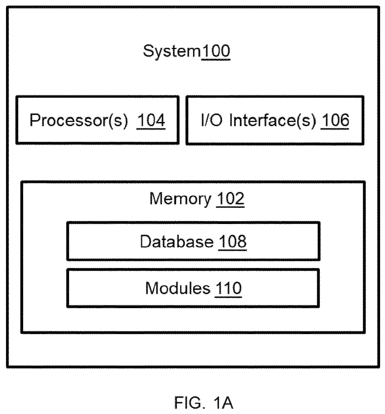

Referring now to the drawings, and more particularly to FIGS. 1A through 6, where similar reference characters denote corresponding features consistently throughout the figures, there are shown preferred embodiments and these embodiments are described in the context of the following exemplary system and/or method.

FIG. 1A is a functional block diagram of a system 100, for multi-level reliability assessment of vendors based on multi-dimensional reliability score by performing data analytics on vendor data, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface to display the individual scores and the computed multidimensional reliability score and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices for receiving the external data associated with vendor.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110. The plurality of modules 110 include programs or coded instructions that supplement applications or functions performed by the system 100 for executing different steps involved in the process the multi-dimensional reliability score computation for plurality of vendors associated with an entity. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

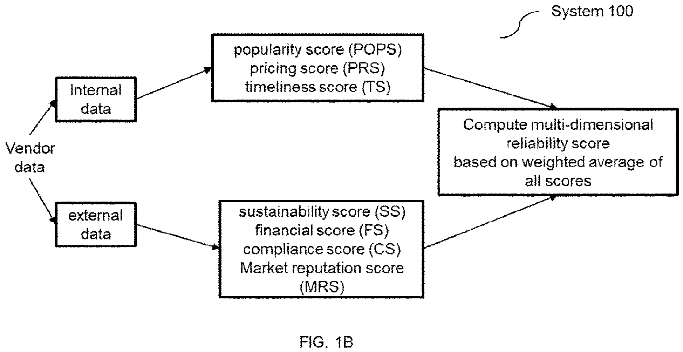

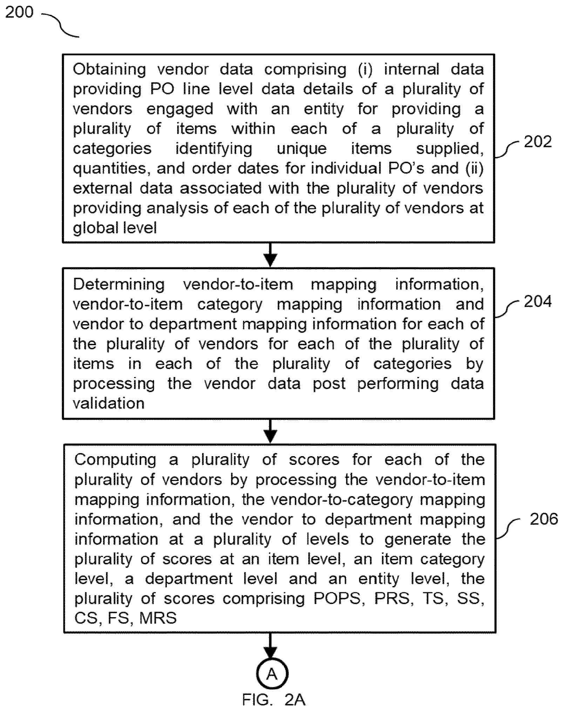

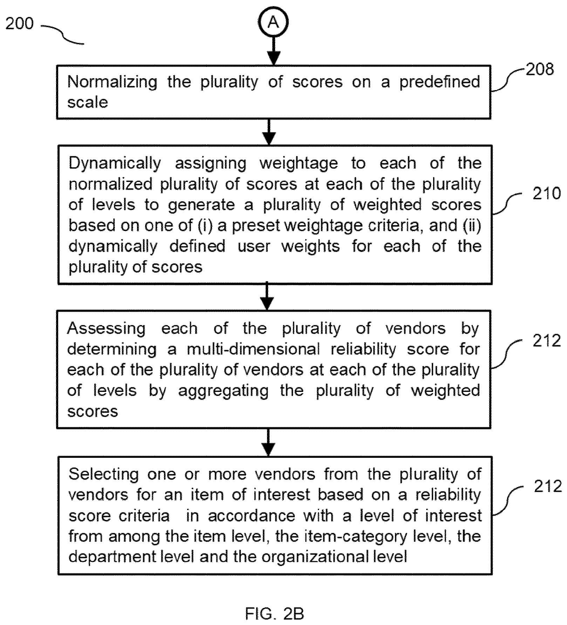

Further, the memory 102 may comprise information pertaining to input(s)/output(s) of each step performed by the processor(s) 104 of the system 100 and methods of the present disclosure. Further, the memory 102 includes a database 108. The database (or repository) 108 may include a plurality of abstracted piece of code for refinement and data that is processed, received, or generated as a result of the execution of the plurality of modules in the module(s) 110. Further, the database can include the vendor data including the internal data and external data used to compute the individual plurality of scores. The computed plurality of scores, which are components to compute the multi-dimensional reliability scores and the like are also maintained in the database 108. Although the data base 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference FIG. 1B and steps in flow diagrams in FIG. 2A and FIG. 2B.

FIG. 1B illustrates a process overview of the system of FIG. 1A, in accordance with some embodiments of the present disclosure, further explained with steps of flow diagram of FIG. 2.

FIGS. 2A through 2B (collectively referred as FIG. 2) is a flow diagram illustrating a method for multi-level reliability assessment of vendors based on multi-dimensional reliability score by performing data analytics on vendor data, using the system of FIG. 1A, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A, the process overview as depicted in FIG. 1B, and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

It can be understood that the 'requirement' of the entity or organization is finding a right vendor for right purpose from among a plurality of vendors already involved with the entity's one or other part of supply chain of a plurality of supply items. The requirements can vary with focus of the entity on different levels at which a vendor has to be identified and not necessarily always at organizational level. Thus, vendor information both from internal information available with the entity and external information sourced from various resources has to be gathered and analyzed.

Now, referring to the steps of the method 200, at step 202 of the method 200, the one or more hardware processors 104 obtaining vendor data comprising (i) internal data providing Purchase Order (PO) line level data details of a plurality of vendors engaged with an entity for providing a plurality of items within each of a plurality of categories identifying unique items supplied, quantities, and order dates for individual PO's and (ii) external data associated with the plurality of vendors providing analysis of each of the plurality of vendors at global level, as depicted in FIG. 1B. The vendor data, specifically the internal data needs to be cleansed and validated in accordance with input data requirement of each of the plurality scores computations. This is performed using standard data cleaning procedures using PYTHON™ and SQL™ queries. Data Validation check is done for date range, null records and PO item combinations for a given category to obtain clean data without null records, duplicate records, column names in the output mapped to corresponding standard column names and so on.

At step 204 of the method 200, the one or more hardware processors 104 determine vendor-to-item mapping information, vendor-to-item category mapping information and vendor to department mapping information for each of the plurality of vendors for each of the plurality of items in each of the plurality of categories by processing the vendor data post performing data validation. This mapping helps to identify extent of individual vendors presence in the entity's supply chain at various levels mentioned above. Thus, the information is used to calculate scores associated with vendor reliability at different levels mentioned above.

At step 206 of the method 200, the one or more hardware processors 104 compute a plurality of scores for each of the plurality of vendors by processing the vendor-to-item mapping information, the vendor-to-category mapping information, and the vendor to department mapping information at a plurality of levels to generate the plurality of scores at an item level, an item category level, a department level, and an entity level. This mapping information enables extracting appropriate data for corresponding score computation.

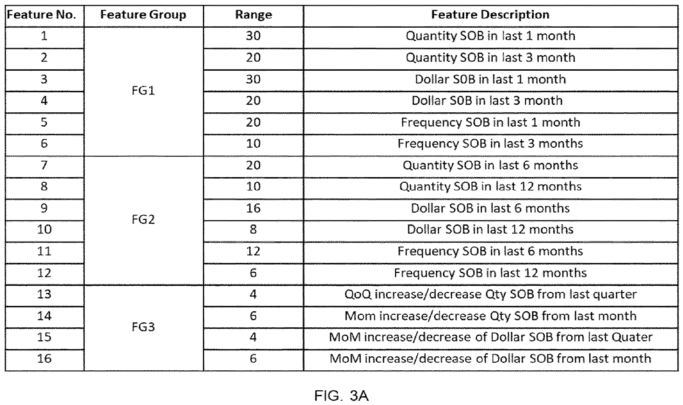

As depicted in FIG. 1B the popularity score, the pricing score, the timeliness score is computed with help of the internal data, while the sustainability score, the financial score, the compliance score, and the market reputation score is computed using the information from the external data. A weighted combination of the plurality of scores is then used at step 212 to compute the multi-dimensional reliability score for each vendor. The plurality of scores and corresponding computation is explained below with help of FIGS. 3A through 6.

**The popularity score also referred to as POPS**: This is indicative of a weighted combination of metrics representing popularity of a vendor in terms of a plurality of popularity features comprising share of business, total volume of materials supplied, and frequency of supply, which is extracted from the internal data. As mentioned earlier PO line level data is submitted identifying unique items supplied, their quantities, and order dates for individual PO's (i.e., vendor-to-item mapping information, vendor-to-item category mapping information and vendor to department mapping information). Data validation check is done for date range, null records and PO item combinations for a given category.

Each of the plurality of popularity features is determined over varying time periods and uniquely combined to form a plurality of popularity features groups. The plurality of popularity feature groups are fixed at FG1, FG2 and FG3. However, the features within each group are intelligently selected based on the properties of the dataset used for scoring. The plurality of popularity FGs are dynamically created based on item-vendor combinations, duration for which the internal data and the external data is available, and an user configuration setting defining the varying time periods for each of the plurality of popularity feature groups, wherein a feature group level score is generated for each of the item-vendor combinations and combined to obtain the popularity score. The varying time periods for which the plurality of popularity FGs are created comprise monthly, quarterly, half yearly and yearly time periods. Thus, amount of business being done with the vendor reflects popularity within an organization or the entity. The popularity score is indicative of the share of items delivered by a vendor (what percentage of an item or item category is supplied by the vendor of interest), total volume in quantity and price of supplied items and the frequency with which they are supplied. The plurality of features for the popularity score are broadly categorized into three categories comprising:

a) Quantity shares of Business (Quantity SOB), defined as a ratio between quantity of an item supplied by a vendor and total quantity of item ordered;
b) Dollar Share of Business (Dollar SOB) defined as a ratio between dollar value of the item supplied by the vendor and total dollar value of item ordered; and
c) Frequency Share of Business (Frequency SOB) defined as a ratio between number of times items ordered from the vendor and total number of times item is ordered.

The categories of features have been generated keeping in mind the different influencing factors for popularity of vendor within the organization. The importance of a feature is determined by its weightage, also referred to as range - higher the range, more powerful is the feature. The weights/ranges get distributed evenly if any feature is not provided by the user. These are calculated only with respect to the long term and short term values provided by the user. All these above features are generated at a monthly, quarterly, half-yearly and yearly level. Depending on the timeframe, the features are grouped together and tagged as feature group. The plurality of popularity FGs are dynamically created based on item-vendor combinations, duration for which the internal data and the external data is available, and an user configuration setting defining the varying time periods for each of the plurality of popularity feature groups. A feature group level score is generated for each of the item-vendor combinations and combined to obtain the popularity score. The feature group level scores generated for each of the item-vendor combinations undergo dynamic curve fitting using an activation function enabling effective and justified discrimination between the feature group level scores. The kurtosis is used to measure the normal-ish distribution of the popularity scores for activation function selection. The system 100 dynamically selects the optimal activation function to generate the final scores.

FIG. 3A depicts example features with corresponding feature description, feature groups (FGs) created for the features and corresponding weightages assigned to each feature, also referred to as ranges. The plurality of popularity feature groups, which are FG1, FG2 and FG3 respectively, cover different impact aspects based on recency, stability, and change as can be seen in FIG. 3A. To compute feature group (FG) level scores, first feature level scores are computed as described below. Feature level scoring for features of (i) FG1 and FG2 is computed using STEP 1 below and (ii) FG3 is computed using STEP 2. For each vendor-item combination, i.e., each row, a score corresponding to each level is generated. For example, for a Vendor V1 selling an item I1, one of the feature-level scores generated would be Quantity SOB of Vendor V1 on Item I1. Similarly, all such feature level scores are generated for each vendor-item combination.

STEP 1:

For Feature Groups 1 and 2 (FG1 and FG2):

If $s >= (x - m) / 3$:

$$Feature(i)\_Score = (R/2) * [\ 1 + (x - m) / 3\ s\ ]\ )$$

Else:

If $x >= m$

$$Feature(i)\_Score = (R/2) * [\ 1 + (x - m) / (1 - m)]$$

Else:

$$Feature(i)\_Score = (R/2) * x / m$$

Where,

- x = Share of Business (quantity or $ value or frequency) for the last x months (as is applicable for the feature)
- m = Mean Share of Business (or 1/Number of Vendors for that item)
- R = Range (weight) of feature
- s = Standard deviation (Std Dev) of Share of Business across vendors for the last x months

STEP 2: For Feature Group 3 (FG3):

If $s >= |(x1 - x2) / 3|$:

$$Feature(i)\_Score = (R/2) * [\ 1 + (x1 - x2)/ 3s]$$

Else:

$$Feature(i)\_Score = (R/2) * [\ 1 + (x1 - x2)]$$

Where,

- x1 = Share of Business (quantity or $ value or frequency) for the most recent month or quarter
- x2 = Share of Business (quantity or $ value or frequency) for the previous month or quarter
- R = Range (weight) of feature
- s = Standard deviation of Share of Business across vendors for the most recent month or quarter
  POPS: Overall score and Avg score:

$$feature\_group\_avg = (2 * sum(R/2)) / total\ number\ of\ features$$

$$feature\_group\_overall\_score = avg(feature\_score)$$

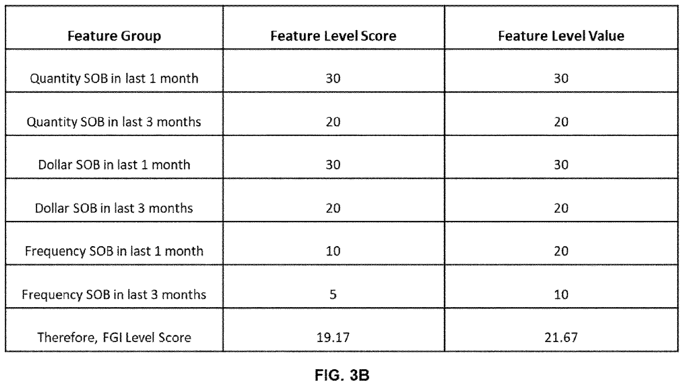

Once feature level scores are determined for each feature, corresponding FG level scores are determined as depicted in FIG. 3B. These are calculated by averaging all the feature level scores within the same feature group. For example, FIG. 3B depicts the feature level scores for a certain vendor-item combination under FG1. Then the feature group level score for FG1 involves the aggregation of feature level scores and feature level values of all features in the corresponding FG.

Once FG level scores are computed for each FG1, FG2 and FG3, a curve fitting using an appropriate activation function is performed. This curve fitting is performed for effective and justified discrimination between the scores. The application of activation function enables transformed output distribution of scores upon passing through the required activation function. Based on the nature of feature group level scores, one of the following activation function is used:

a. Linear Activation Function: This function fits the output score distribution to a straight line.
b. Sigmoid Activation Function: This function fits the output score distribution to an S-shaped curve. Basically, it stretches the score distribution towards the extremes.
c. Logarithmic Activation Function: This function fits the output score distribution to an incremental logarithmic curve to a certain threshold
d. Exponential Activation Function: This function fits the output score distribution to an exponential curve

Activation Function Selection Mechanism: The kurtosis is used to measure the normal-ish distribution of the POPS scores in the bins are utilized for activation function selection. Kurtosis is a measure of the combined sizes of the two tails. It measures the amount of probability in the tails. Kurtosis hence measures the spread in the distribution. For normal distribution it is 3. However, it is required that POPS score should be spread out over through all bins. For all the activation functions, the kurtosis is calculated and the Activation function with least kurtosis is selected as the final activation function for the given organization and utilized to calculate POPS for all the aggregation levels like item, item code, departments, etc.

Score Standardization or normalization: The POPS or popularity score values obtained are then standardized to lie between a predefined scale such as 0-10, to give the required Popularity Score (POPS).

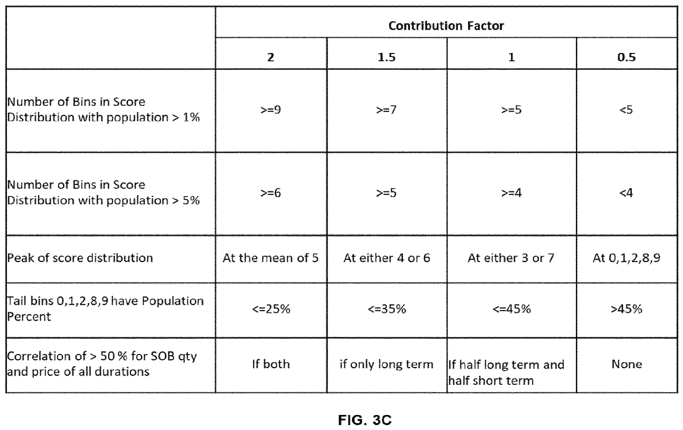

FIG. 3C depicts: POPS Metric-Rules and corresponding Contribution. The table in FIG. 3C basically reflects the quality of the distribution of the generated pops scores. The quality is estimated using the below methods.

a. Create the frequency distribution of the generated POPS.
b. Check how many score values are having the distribution percentage value as >0.01 and give the weights accordingly (between 2, 1.5, 1, 0.5). More weightage is given if the distribution percentage is more.
c. Check how many score values are having the distribution percentage value as >0.05 and give the weights accordingly (between 2, 1.5, 1, 0.5). More weightage is given if the distribution percentage is more.
d. Check if the peak of the distribution is occurring at score 5 (i.e., the middle value of the pops scores). Accordingly give the weights (between 2, 1.5, 1, 0.5). More weightage is given if the peak occurs nearer to the middle value of the scores. (e.g., 4 to 6)
e. Calculate the Pearson correlation between pops score and all the derived features. If the correlation is greater than threshold (i.e., 0.5) then give highest weight else give accordingly. (Between 2, 1.5, 1, 0.5).
f. Check if less percentage of score values are lying in the tail side of the distribution. Accordingly give the weights(Between 2, 1.5, 1, 0.5). More weightage is given if less percentage of scores fall in the tail side.
g. Calculate the quality score as the sum of all the above calculated weights

Thus, the POPS metric is generated for the POPS scoring to indicate the quality of scoring

$$All\_score\_criterion = (perc\_criterion1 + perc\_criterion2 + criterion3 + criterion4 + criterion5)$$

perc_criterion1 & perc_criterion2 : Ranges from 0.5 to 2 based on the frequency distribution percentages
criterion3 : Ranges from 0.5 to 2 based on the mid-point estimation of the pops score distribution

criterion4 : Ranges from 0.5 to 2 based on the pricing-quantity correlation
criterion5 : Ranges from 0.5 to 2 based on the distribution of the tail bins.
if metric_value >= 9: quality = "Great"
if metric_value >= 6: quality = "Good"
if metric_value >= 4: quality = "Average"
else: quality = "Need Attention"

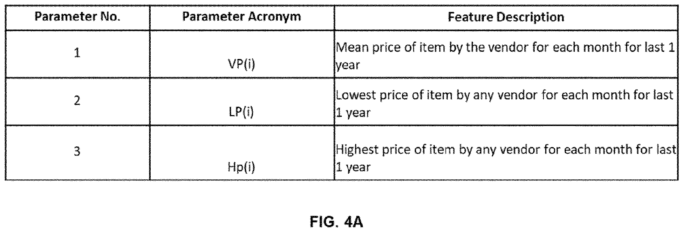

**The Pricing Score also referred to as PRS**: This is indicative of the comparative price charged by a vendor from among the plurality of vendors for an item with respect to other vendors based on a plurality of pricing features (PRS features) comprising mean price VP(i) indicative i. e. average item price sold by a specific vendor with in a time window, highest price HP(i), and lowest price LP(i) i.e. minimum item price with in a time window, of each of the plurality of vendors and volume of items supplied by each of the plurality of vendors and total volume of items supplied by the plurality of vendors as depicted in FIG. 4A. This information required for PRS features is extracted from the internal data.

Pricing score (PRS) reflects how cheap or expensive a vendor is with respect to another vendor selling the same sort of item. Pricing score is a metric indicative of the comparative price charged by vendor for a certain item with respect to other vendors for the same item. The pricing score metric is normalized to range between 1 to 10 - higher the score metric, more competitive is the pricing offered by the vendor for that item. Lesser the pricing score, the more expensive is the vendor for that item.

Level of Score: Firstly, the pricing score is calculated for the vendor on various level like item, item category, department, organizational. Feature generation and all other computation take places for the most granular level i.e., item level score generation

Input data validation and selection: Purchase Order (PO) Line level data (internal data) is submitted identifying unique items supplied, their quantities, and order dates for individual PO's from internal data (i.e., vendor-to-item mapping information, vendor-to-item category mapping information and vendor to department mapping information). Data Validation check is done for date range, null records and PO item combinations for a given category. The whole dataset is divided into several time-frame chunks depending upon the user provided time_window value. (Usually the time_window value is 3-4 months). E.g., if there is total data of 12 months duration and time_window is 3 months, then the data is divided into 4 chunks. The column ""time_window number"" defines each particular chunk number.

Data Quality Checks: The data quality checks are important to be applied on the data before preparing the features for PRS. The reason for these quality checks is majorly contributed by the price variation within each matched item category i.e., the level at which the PRS gets calculated. Below are the sample cases and their corresponding PRS outputs:

i) % Item with more than one vendor - Max Score i.e., 10 given to such line entries
ii) % item with no price variation - Max Score i.e., 10 given to such line entries
iii) % item with huge price variation - Max/2 Score i.e., 5 given to such line entries

a. Item with coefficient of variance (cv) greater than 100, where CV = (Standard Deviation of price_per_unit * 100) / mean price of price_per_unit
b. Item with maximum price is greater than 2 times of minimum price. max price, min price, mean price, standard deviation of price are grouped by item_codes (i.e., for a specific item)

Feature Generation: Overall pricing score of a vendor for an item, for example, is weighted average of all the monthly scores for last one year. However, it is customizable, can be quarterly, half-yearly, yearly with default value of one year but can be any duration as per user choice. The weights are decided based on the recency.

Score calculation: Weight is be decided based on the recency. For any given month if a vendor is the only supplier of an item, Scoring algorithm searches on the nearest three months to find other vendors so that pricing of the item can be comparable, and score can be assigned accordingly for each vendor. For all items which is supplied by the only one vendor will get a default pricing score. Certain assumptions are made when computing the pricing score which might not always hold true for sparse data: i) average monthly price (benchmark) can be heavily biased at times ii) in case enough monthly data points are not available, comparison of prices are made across months thus causing biases due to price fluctuations that might occur:

PRS scoring logic: Steps for calculation of PRS for each vendor, item, time _window combination:

1) Calculate the minimum price and scale factor for a particular item within a specific time window, where scale factor (K) = (Max price - Min price) / Min price if max-price > 2 x min-price else 1
2) Calculate Volume based Weighted Avg Price (VWAP): VWAP is calculated according to the formula sum of (p(i) x v(i)) / V for the particular item and time _window (across vendors).

3) Calculate the price standard deviation for the particular item and time_window (across vendors)
4) Calculate the hp_lp score according to the below formula and VBWAPS score according to the cdf distribution:

    i.

$$hp\_lp\_score = M*[1-(VP-LP)/K*LP]$$

    ii.

$$z\_score = (vendor\_mean\_price - vbwap\ score) / price\_std$$

    iii. Calculate VBWAPS = Right side probability of the CDF curve of z_score (i.e., 1 - st.norm.cdf(z_score))

5) Calculate the Overall score as the mean of hp_lp_score and VBWAPS:

$$Overall\ Score = (hp\_lp\_score + VBWAPS) / 2$$

6) PRS score for a specific vendor-item combination is calculated as the average of all the overall scores across all the time windows.
7) Default PRS scores are given to ineligible items (Which do not satisfy the previously mentioned PRS conditions)

    i. Item supplied by single vendor: 999
    ii. Too much price Variation (cv > 100): 998
    iii. Too much price Variation (max price >> min price): 997
    iv. No price Variation: 10

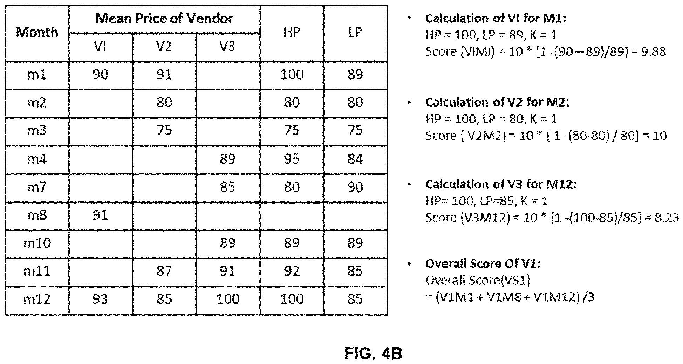

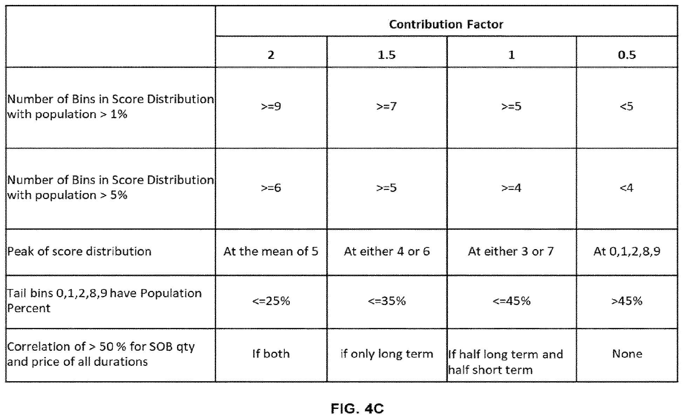

FIG. 4B, depicts a PRS scoring Logic example along with PRS computed for vendor1 (V1). PRS metrics is a quantitative measure of the quality of PRS developed. The metrics is calculated out of 10, i.e., more is the value better is the PRS generated. Hence, four categories of metrics values are created defining best, good, okay and needs attention. In case the metrics value is low, tuning of hyperparameters should be performed to get better PRS metrics value. FIG. 4C depicts PRS metrics-rules and corresponding contribution. The metrics rules depicted in FIG. 4C reflects the quality of the distribution of the generated PRS. The quality is estimated using the below methods.

    a. Create the frequency distribution of the generated PRS.
    b. Check how many score values are having the distribution percentage value as >0.01 and give the weights accordingly (between 2, 1.5, 1, 0.5). More weightage is given if the distribution percentage is more.
    c. Check how many score values are having the distribution percentage value as >0.05 and give the weights accordingly (between 2, 1.5, 1, 0.5). More weightage is given if the distribution percentage is more.
    d. Check if the peak of the distribution is occurring at score 5 (i.e., the middle value of the prs scores). Accordingly give the weights(Between 2, 1.5, 1, 0.5). More weightage is given if the peak occurs nearer to the middle value of the scores. (e.g., 4 to 6)
    e. Calculate the correlation between prs score and the derived PRS features (i.e., lp_score and vbwaps score). If both the correlation values are greater than threshold (i.e., 0.8) then give higher weightage else give accordingly bBetween 2, 1.5, 1, 0.5). This is only calculated for purchase orders having eligible item codes (as per PRS model conditions).
    f. Check if less percentage of score values are lying in the tail side of the distribution. Accordingly give the weights (between 2, 1.5, 1, 0.5). More weightage is given if less percentage of scores fall in the tail side.
    g. Calculate the percentage of records which are eligible for PRS calculation. Accordingly give the weights (between 2, 1.5, 1, 0.5). More weightage is given if the calculated percentage is higher.
    h. Calculate the quality score as the weighted average of all the above calculated weights.

**The timeliness score (TS):** This is predicted by a ML model, also referred to as TS model, trained on a plurality of timeliness features extracted from the internal data and comprising a historical performance of a vendor and other vendors for a single item and across the plurality of items, across the plurality of levels. As mentioned earlier the internal data comprising Purchase Order Line level data used the extract unique items supplied, their quantities, and order dates for individual PO's (i.e., vendor-to-item mapping information, vendor-to-item category mapping information and vendor to department mapping information). Data Validation check is done for date range, null records and PO item combinations for a given category before the timeliness features are extracted.

Timeliness score provides the prediction of whether a particular vendor shall deliver the product(item) within expected duration or shall delay the delivery. The "timeliness" of a vendor is dependent on the historical performance of the vendor. An open line-entry is a Purchase Order where the Actual Delivery Date is not available, and the model predicts if delivery will be before or after the Estimated Delivery Date. For an open line-entry, it provides the probability of the item being on-time/early or being delayed. It provides a comparison between multiple vendors at any given organization level for the purpose of understanding how timely each of these vendors deliver their products. The probability of delay and on-time/early is then converted into normalized metric between 0-10 range - higher the score metric better is the timely delivery by the product provider. The most granular level of the score is at PO order date, which is aggregated to the higher levels.

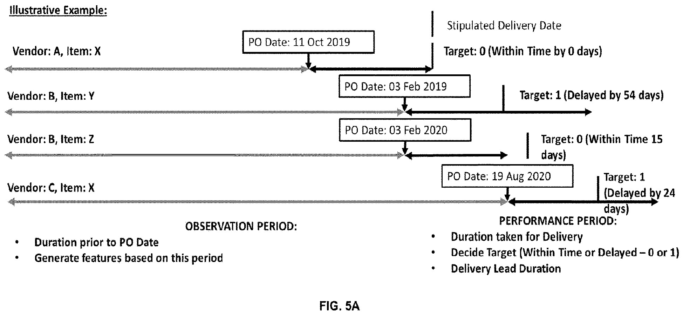

FIG. 5A is an illustrative example to explain timeliness score computation and the steps are explained below. The example depicts delivery timeline of multiple vendors (historical performance). If the delivery is within a stipulated time ( for example, 15 days) from the PO, the 'target' variable is set to 0 else set to 1. Thus, of Vendor A for item X: target = 0, Vendor B for item Y: target = 1and Z target = 0, and Vendor C for item X: target = 1.

Data Quality Checks are performed as below to remove undesired data:

i. Unavailable/Null Estimated Delivery Date: The TS and DLT targets are derived from the PO order date and estimated/actual delivery date, hence it is mandatory to for each line entry to have estimated delivery date
ii. Estimated Delivery Date: The removal of entries for which estimated delivery date is mentioned before the PO Order Date. Since, delivery cannot be expected before the ordering of any PO, hence such entries are considered malicious.
iii. Actual Delivery Date: The removal of entries for which actual delivery date is mentioned before the PO Order Date. Since, actual cannot be performed before the ordering of any PO, hence such entries are considered malicious.

Timeliness feature from the vendor timelines as shown in example of FIG. 5A are obtained. The quantity and frequency of occurrence are calculated historically for the delay/on time/early delivered items. Timeliness of a vendor depends upon following parameters -

1. How the vendor has performed historically for the same item delivery
2. How the vendor has performed for other items
3. What is the delivery duration historically
4. How vendor performs for other items
5. Other vendors performances

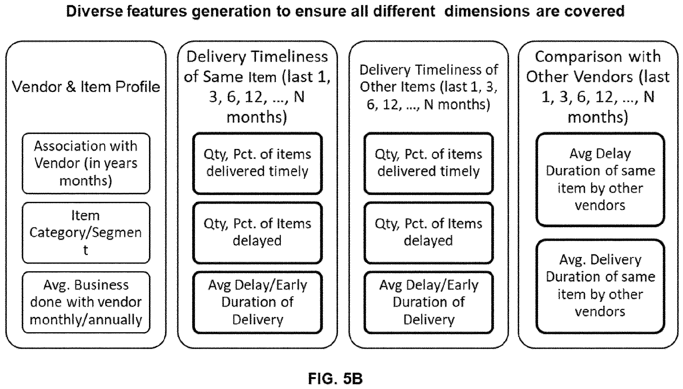

FIG. 5B depicts all the features generated at different level of data for the time windows of "1 month", "3 months", "6 months" and "12 months" from information such as provided in FIG. 5A. The aggregation levels of the data are specifically-

i. Same vendor: same item for the $X^{th}$ month range
ii. Same vendor: all items for the $X^{th}$ month range
iii. Same vendor same item over whole historical data available
iv. All vendor same item over whole historical data available
v. PO level : features developed based on the current PO
vi. Other vendors same item - features of current item being provided by other vendors
vii. Same vendor all items - features of current vendor providing different products.

The TS Model or ML model is built using the timeliness features. In an example implementation, the Timeliness Score uses a XGBoost model trained on all the features data for the historically closed POs. The XGBoost or Extreme Gradient Boosting, is a scalable, distributed gradient-boosted decision tree (GBDT) machine learning library. It provides parallel tree boosting and is the leading machine learning library for regression, classification, and ranking problems.

a. The TS model provides the probability of delay *P(Delay)* which is further utilized by a Delivery Lead Time (DLT) model.
b. *P(Delay)* is further utilized for the aggregation of timeline score or TS for given vendor at various levels i.e., item, item-category, organization, and department levels, etc.

The tuning of these parameters is performed specific to an organization, reason being, every organization has specific vendor and item structure. The TS model predicts the Timeliness score in the range of 1 to 10.

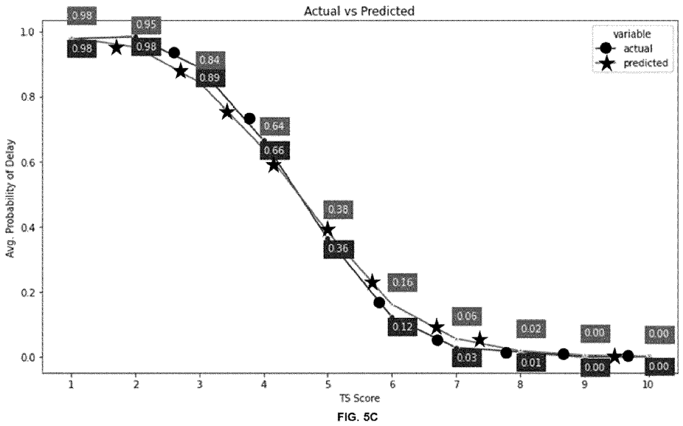

FIG. 5C, with reference to FIGS. 5A and 5B, depicts the percentage(pct) actual delayed cases (ground truth) corresponding to each score band lying across 1 to 10 ( for example, 1 to 2 , 2 to 3, .. 9 to 10) of TS on X axis and the predicted delay for the same band by the TS model for each vendor on the Y-axis.

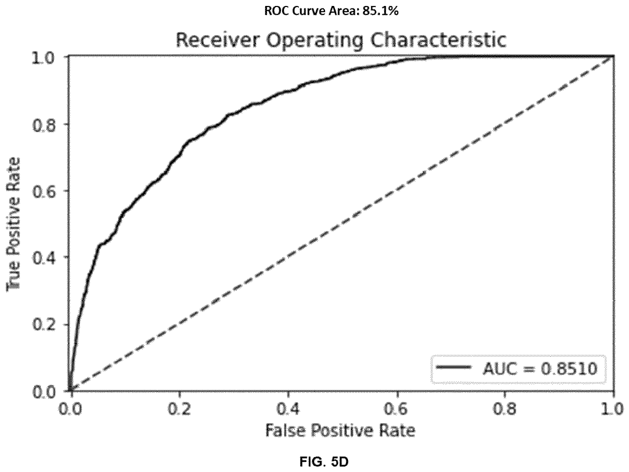

FIG. 5D, with reference to FIGS. 5A, 5B and 5C, depicts a receiver operating characteristic (ROC) curve that enables to identify how strong the model is in discriminating the delayed population from the on-time ones. More outwardly convex the curve, stronger is the model.

**Model Accuracy** = Percentage of test population for which the model prediction (0/1) is correct **= 78%**

**The sustainability score (SS):** This is obtained by integrating a plurality of sustainability sub-scores obtained for each of the plurality of vendors from the external data such as a third party sustainability data vendor. Sustainability score helps to assess whether an organization (herein vendor or vendor organization) is sustainable based on its policies and actions pertaining to different facets within the ecosystem ranging from finances to human rights to environmental policies. A sustainability rating is integrated from an external data source to create the sustainability Score. The sustainability data vendor provides a sustainable rating for a supplier with different sub-scores. The sustainable rating received from third party is generally in range of 0-100 and hence converted to the desired range of 0-10 as SS. The SS is then mapped for corresponding vendors using supplier ID and stored/updated in the database 108.

**The financial score (FS):** This is obtained by integrating a plurality of financial parameter scores assigned to each of the plurality of vendors, extracted from the external data. Financial viability is one of the most important parameters to assess whether the vendor/vendor organization is financially stable - hence, a dedicated score to evaluate this aspect of a supplier vendor is necessary. The data for the financial score is sourced monthly or quarterly or at a defined frequency from a third party financial data organization that provides financial sub-scores for the vendor on failure rating, delinquency rating, credit rating (credit worthiness) and overall financial rating. Similar to SS the overall score is computed by integrating various rating (sub-scores) received from third part and then normalized to scale of 0-10.

**Example Financial Score (FS) calculation explained for two sub-scores: financial rating and credit rating received for a vendor-** The method disclosed herein maps the financial rating received from the third party, which vary between HH (worst) to 5A (best), to a quantitative value as in Table 1 below where, max_strength = 15 (Grade of 5A has 15 Financial Strength Score) .

Similarly, for creditworthiness, gradation for riskSegment is between 4 (worst) to 1 (best) as received from external sources, as in Table 2 below along with mapping score for FS calculation, where max_creditworthiness = 4 (Grade of 1 has 4 as creditworthiness). Thus, for any vendor organization (vendor) to have better financial score, lower is the riskSegment better is the financial score.

Table 1

| Grade | HH | GG | FF | EE | DD | DC | CC | CB | BB | BA | 1A | 2A | 3A | 4A | 5A |
|---|---|---|---|---|---|---|---|---|---|---|---|---|---|---|---|
| Score | 1 | 2 | 3 | 4 | 5 | 6 | 7 | 8 | 9 | 10 | 11 | 12 | 13 | 14 | 15 |

Table 2

| Grade | 4 | 3 | 2 | 1 |
|---|---|---|---|---|
| Score | 1 | 2 | 3 | 4 |

In an example, say for vendor organization ABC the Financial Strength as received originally for external sources is 'BB' and the creditworthiness is 2. This post mapping in accordance with table 1 and 2, the quantitative values are 9 and 3, respectively.

$$FS = \frac{Financial\ Strength}{\max\_strength} * 5 + \frac{Creditworthiness}{\max\_creditworthiness} * 5$$

Thus, for ABC- the FS = 9*5/15 + 3*5/4 = 6.74 (Out of 10- normalized)

**The compliance score (CS):** This is obtained by integrating a plurality of compliance parameter scores assigned to each of the plurality of vendor. The compliance parameters are extracted from the external data. The CS Sub-Category (compliance parameters or indicators) have defined weightages for financial and other field parameters as provided below.

**Financial Legal Fields' (indicators) Weightages:**

Bankruptcy (ever, open, L12M cnt, recent filing date) : 1
Insolvency (ever): 1
Liquidation (ever) : 1
Financial Embarrassment (ever, open) : 0.67
Liens (ever, open, L12M cnt, recent filing date) : 0.67
Claims (ever, open): 0.33
Suspension of Payments (ever) : 0.33

**Other Legal Fields'(indicators) Weightages :**

Criminal Proceedings (ever, open): 1
Debarments (ever, open, ever cnt, recent filing date) : 1
Judgments (ever, open, L12M cnt, recent filing date) : 0.33
Legal Events (ever) : 0.33
Suits (ever, open, L12M cnt, recent filing date) : 0.67
Other Legal Events (ever, open) : 0.33
Where cnt= count; and L12cnt = Last 12 Month Count

Table 3: Example- Compliance indicators received for vendor1

| Indicator | Field Weightage | Last 12 months count. | Category | Indicator Multiplier |
|---|---|---|---|---|
| **Bankruptcy** | **1** | 3 | Open but last 12 months count>0 | **4** |
| **Liens** | **0.67** | 0 | Open but last 12 months count=0 | **3** |
| **Suspension of Payments** | **0.33** | Not applicable | Only Ever | **1** |

**Compliance Score (CS) Logic** : If no indicators are present, then the score is 10 Else, deduct points from 10 based on Field Weightage multiplied by corresponding Indicator Multiplier. If score becomes less than 1, then score = 1

**Indicator Multipliers:**

• Only Ever : 1
• Last 12 Month Count > 0 but no Open: 2
• Open but Last 12 Month Count = 0: 3
• Open and Last 12 Month Count > 0: 4

Hence, CS for vendor 1= 10 - (1 *4)-(0.67*3)-(0.33 * 1) = 3.32

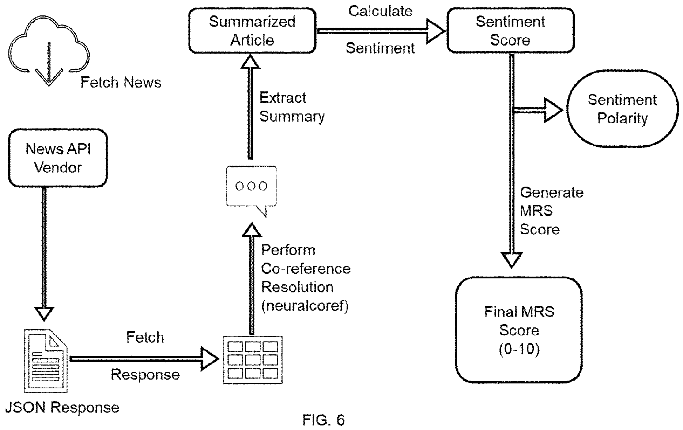

**The market reputation score (MRS):** This is derived from a sentiment score calculated from marker news information, obtained from the external data, using Natural Language Processing (NLP). The MRS is a score which explains the external sentiment related to a vendor in public domain. The score metric also indicates the level of sentiment shared by reviewers for that vendor. The MRS is aimed to capture how the sentiments surrounding the vendor/supplier based on external data as depicted in FIG. 6.

Once the plurality of scores (individual scores) for various dimensions are computed as explained in step 204, then at step 208 of the method 200, the one or more hardware processors 104 normalize the plurality of scores on a predefined scale range such as 0-10. As well understood normalization brings all scores to same scale enabling true comparison for further processing.

At step 210 of the method 200, the one or more hardware processors 104 dynamically assign weightage to each of the normalized plurality of scores at each of the plurality of levels to generate a plurality of weighted scores based on one of (i) a preset weightage criteria, and (ii) dynamically defined user weights for each of the plurality of scores. For example, if user does not specify the weightage, the preset criterial can be set to 'assign equal weightages to each of the plurality of scores. However, in certain scenarios user may intend to select vendor focused on one or more dimensions while other dimensions may be ignored or provided minimal weightage. Thus, the method enables user to specify the scores of interest and their weightages. For example, if company ABC is looking to reduce cost they will give a higher weightage to Pricing Score. If a Company XYZ is looking to improve delivery time for its supplies it will give higher weightage to Timeliness Score.

At step 212 of the method 200, the one or more hardware processors 104 assess each of the plurality of vendors by determining the multi-dimensional reliability score for each of the plurality of vendors at each of the plurality of levels by aggregating the plurality of weighted scores, each focusing on different dimension or aspect associated with vendor. The multi-dimensional reliability score, also referred to as Overall Score is an aggregated version of all the different scores to provide a holistic amalgamated view of a vendor/supplier competitiveness and sustainability. By default, it is calculated as the average of all the available scores for a vendor for a particular segment i.e., for e.g., if there are 4 out of the 7 different scores available for a vendor, the Overall Score is the average of those 4 scores. While the default weightage of each score is equal, the same can be tweaked by the user - as per their inclination or preference.

At step 214 of the method 200, the one or more hardware processors 104 select one or more vendors from the plurality of vendors for an item of interest based on a reliability score criteria in accordance with a level of interest from among the item level, the item-category level, the department level, and the organizational level. For example, the reliability criteria can be predefined to select and display top 3 vendors based on highest scores, and the final selection can be left to SME or the end user.

Thus, the method disclosed herein provides a holistic multi-dimensional reliability score that aggregates multiple, multi-dimensional scores for a supplier, generated at item, item category, department and organizational level using internal and external vendor data. These scores uncover hidden patterns present in various aspects of transaction of a supplier with the organization as well as external aspects of a supplier such as financial health, environmental impact and market sentiment related to the supplier. The reliability score can be customized by assigning varying weights to individual scores based on one or more dimensions the user is focused on during vendor selection.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for reliability assessment of vendors, the method comprising:

   obtaining (202), via one or more hardware processors, vendor data comprising (i) internal data providing Purchase Order (PO) line level data details of a plurality of vendors engaged with an entity for providing a plurality of items within each of a plurality of categories identifying unique items supplied, quantities, and order dates for individual PO's, and (ii) external data associated with the plurality of vendors providing analysis of each of the plurality of vendors at global level;

   determining (204), via the one or more hardware processors, vendor-to-item mapping information, vendor-to-item category mapping information and vendor to department mapping information for each of the plurality of vendors for each of the plurality of items in each of the plurality of categories by processing the vendor data post performing data validation;

   computing (206), via the one or more hardware processors, a plurality of scores for each of the plurality of vendors by processing the vendor-to-item mapping information, the vendor-to-category mapping information, and the vendor to department mapping information, wherein the plurality of scores are generated at a plurality of levels comprising an item level, an item category level, a department level and an entity level, the plurality of scores comprising:

   a) a popularity score (POPS), indicative of a weighted combination of metrics representing popularity of a vendor in terms of a plurality of popularity features based on share of business, total volume of materials supplied, and frequency of supply, which is extracted from the internal data, wherein each of the plurality of popularity features is determined over varying time periods and uniquely combined to form a plurality of popularity features groups (FGs);
   b) a pricing score (PRS), indicative of the comparative price charged by a vendor from among the plurality of vendors for an item with respect to other vendors based on a plurality of pricing features comprising (i) mean price, highest price, and lowest price of each of the plurality of vendors, (ii) volume of items supplied by each of the plurality of vendors, and (iii) total volume of items supplied by the plurality of vendors, wherein the pricing features are extracted from the internal data;
   c) a timeliness score (TS) predicted by a Timeline Score (TS) model trained on a plurality of timeliness features extracted from the internal data and comprising a historical performance of a vendor and other vendors for a single item and across the plurality of items, across the plurality of levels;
   d) a sustainability score (SS) obtained by integrating a plurality of sustainability sub-scores obtained for each of the plurality of vendors from the external data;
   e) a financial score (FS) obtained by integrating a plurality of financial parameter scores assigned to each of the plurality of vendors, extracted from the external data;
   f) a compliance score (CS) by integrating a plurality of compliance parameter scores assigned to each of the plurality of vendor, extracted from the external data; and
   g) a market reputation score (MRS) derived from a sentiment score calculated from marker news information, obtained from the external data, using Natural Language Processing (NLP);

   normalizing (208), via the one or more hardware processors, the plurality of scores on a predefined scale;
   dynamically assigning weightage (210), via the one or more hardware processors, to each of the normalized plurality of scores at each of the plurality of levels to generate a plurality of weighted scores based on one of (i) a preset weightage criteria, and (ii) dynamically defined user weights for each of the plurality of scores;
assessing (212), via the one or more hardware processors, each of the plurality of vendors by determining a multi-dimensional reliability score for each of the plurality of vendors at each of the plurality of levels by aggregating the plurality of weighted scores; and

selecting (214), via the one or more hardware processors, one or more vendors from the plurality of vendors for an item of interest based on a reliability score criteria in accordance with a level of interest from among the item level, the item-category level, the department level, and the organizational level.

2.   The method as claimed in claim 1, wherein the plurality of features for the popularity score are broadly categorized into three categories comprising:

a) Quantity shares of Business (Quantity SOB), defined as a ratio between quantity of an item supplied by a vendor and total quantity of item ordered;
b) Dollar Share of Business (Dollar SOB) defined as a ratio between dollar value of the item supplied by the vendor and total dollar value of item ordered; and
c) Frequency Share of Business (Frequency SOB) defined as a ratio between number of times items ordered from the vendor and total number of times item is ordered.

3.   The method as claimed in claim 1, wherein the plurality of popularity FGs are dynamically created based on item-vendor combinations, duration for which the internal data and the external data is available, and an user configuration setting defining the varying time periods for each of the plurality of popularity feature groups, wherein a feature group level score is generated for each of the item-vendor combinations and combined to obtain the popularity score

4.   The method as claimed in claim 3, wherein the varying time periods for which the plurality of popularity FGs are created comprise monthly, quarterly, half yearly and yearly time periods.

5.   The method as claimed in claim 1, wherein the feature group level scores generated for each of the item-vendor combinations undergo dynamic curve fitting using an activation function enabling effective and justified discrimination between the feature group level scores.

6.   The method as claimed in claim 1, wherein a monthly pricing score for each vendor is computed by penalizing each vendor via a scale factor (K), wherein the (K) is set to non-unity value if difference between the highest price and the lowest price of the item of the vendor in a year exceeds above a predefined threshold.

7.   The method as claimed in claim 6, wherein the pricing score for each vendor is average of the monthly pricing score across one or more months the vendor has supplied the item.

8.   A system (100) for reliability assessment of vendors, the system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

obtain vendor data comprising (i) internal data providing Purchase Order (PO) line level data details of a plurality of vendors engaged with an entity for providing a plurality of items within each of a plurality of categories identifying unique items supplied, quantities, and order dates for individual PO's, and (ii) external data associated with the plurality of vendors providing analysis of each of the plurality of vendors at global level;
determine vendor-to-item mapping information, vendor-to-item category mapping information and vendor to department mapping information for each of the plurality of vendors for each of the plurality of items in each of the plurality of categories by processing the vendor data post performing data validation;
compute a plurality of scores for each of the plurality of vendors by processing the vendor-to-item mapping information, the vendor-to-category mapping information, and the vendor to department mapping information, wherein the plurality of scores are generated at a plurality of levels comprising an item level, an item category level, a department level and an entity level, the plurality of scores comprising:

a) a popularity score (POPS), indicative of a weighted combination of metrics representing popularity of a vendor in terms of a plurality of popularity features based on share of business, total volume of materials supplied, and frequency of supply, which is extracted from the internal data, wherein each of the plurality of popularity features is determined over varying time periods and uniquely combined to form a plurality of popularity features groups (FGs);

b) a pricing score (PRS), indicative of the comparative price charged by a vendor from among the plurality of vendors for an item with respect to other vendors based on a plurality of pricing features comprising (i) mean price, highest price, and lowest price of each of the plurality of vendors, (ii) volume of items supplied by each of the plurality of vendors, and (iii) total volume of items supplied by the plurality of vendors, wherein the pricing features are extracted from the internal data;

c) a timeliness score (TS) predicted by a Timeline Score (TS) model trained on a plurality of timeliness features extracted from the internal data and comprising a historical performance of a vendor and other vendors for a single item and across the plurality of items, across the plurality of levels;

d) a sustainability score (SS) obtained by integrating a plurality of sustainability sub-scores obtained for each of the plurality of vendors from the external data;

e) a financial score (FS) obtained by integrating a plurality of financial parameter scores assigned to each of the plurality of vendors, extracted from the external data;

f) a compliance score (CS) by integrating a plurality of compliance parameter scores assigned to each of the plurality of vendor, extracted from the external data; and

g) a market reputation score (MRS) derived from a sentiment score calculated from marker news information, obtained from the external data, using Natural Language Processing (NLP);

normalize the plurality of scores on a predefined scale;

dynamically assign weightage to each of the normalized plurality of scores at each of the plurality of levels to generate a plurality of weighted scores based on one of (i) a preset weightage criteria, and (ii) dynamically defined user weights for each of the plurality of scores;

assess each of the plurality of vendors by determining a multi-dimensional reliability score for each of the plurality of vendors at each of the plurality of levels by aggregating the plurality of weighted scores; and

select one or more vendors from the plurality of vendors for an item of interest based on a reliability score criteria in accordance with a level of interest from among the item level, the item-category level, the department level, and the organizational level.

9. The system as claimed in claim 8, wherein the plurality of features for the popularity score are broadly categorized into three categories comprising:

a) Quantity shares of Business (Quantity SOB), defined as a ratio between quantity of an item supplied by a vendor and total quantity of item ordered;

b) Dollar Share of Business (Dollar SOB) defined as a ratio between dollar value of the item supplied by the vendor and total dollar value of item ordered; and

c) Frequency Share of Business (Frequency SOB) defined as a ratio between number of times items ordered from the vendor and total number of times item is ordered.

10. The system as claimed in claim 8, wherein the one or more hardware processors dynamically create the plurality of popularity FGs based on item-vendor combinations, duration for which the internal data and the external data is available, and an user configuration setting defining the varying time periods for each of the plurality of popularity feature groups, wherein a feature group level score is generated for each of the item-vendor combinations and combined to obtain the popularity score.

11. The system as claimed in claim 10, wherein the varying time periods for which the plurality of popularity FGs are created comprise monthly, quarterly, half yearly and yearly time periods.

12. The system as claimed in claim 8, wherein the feature group level scores generated for each of the item-vendor combinations undergo dynamic curve fitting using an activation function enabling effective and justified discrimination between the feature group level scores.

13. The system as claimed in claim 8, a monthly pricing score for each vendor is computed by penalizing each vendor via a scale factor (K), wherein the (K) is set to non-unity value if difference between the highest price and the lowest price of the item of the vendor in a year exceeds above a predefined threshold.

**14.** The system as claimed in claim 8, wherein the pricing score for each vendor is average of the monthly pricing score across one or more months the vendor has supplied the item.

**15.** One or more non-transitory machine-readable information storage mediums comprising one or more instructions which when executed by one or more hardware processors cause:

obtaining, vendor data comprising (i) internal data providing Purchase Order (PO) line level data details of a plurality of vendors engaged with an entity for providing a plurality of items within each of a plurality of categories identifying unique items supplied, quantities, and order dates for individual PO's, and (ii) external data associated with the plurality of vendors providing analysis of each of the plurality of vendors at global level;

determining, vendor-to-item mapping information, vendor-to-item category mapping information and vendor to department mapping information for each of the plurality of vendors for each of the plurality of items in each of the plurality of categories by processing the vendor data post performing data validation;

computing, a plurality of scores for each of the plurality of vendors by processing the vendor-to-item mapping information, the vendor-to-category mapping information, and the vendor to department mapping information, wherein the plurality of scores are generated at a plurality of levels comprising an item level, an item category level, a department level and an entity level, the plurality of scores comprising:

a) a popularity score (POPS), indicative of a weighted combination of metrics representing popularity of a vendor in terms of a plurality of popularity features based on share of business, total volume of materials supplied, and frequency of supply, which is extracted from the internal data, wherein each of the plurality of popularity features is determined over varying time periods and uniquely combined to form a plurality of popularity features groups (FGs);

b) a pricing score (PRS), indicative of the comparative price charged by a vendor from among the plurality of vendors for an item with respect to other vendors based on a plurality of pricing features comprising (i) mean price, highest price, and lowest price of each of the plurality of vendors, (ii) volume of items supplied by each of the plurality of vendors, and (iii) total volume of items supplied by the plurality of vendors, wherein the pricing features are extracted from the internal data;

c) a timeliness score (TS) predicted by a Timeline Score (TS) model trained on a plurality of timeliness features extracted from the internal data and comprising a historical performance of a vendor and other vendors for a single item and across the plurality of items, across the plurality of levels;

d) a sustainability score (SS) obtained by integrating a plurality of sustainability sub-scores obtained for each of the plurality of vendors from the external data;

e) a financial score (FS) obtained by integrating a plurality of financial parameter scores assigned to each of the plurality of vendors, extracted from the external data;

f) a compliance score (CS) by integrating a plurality of compliance parameter scores assigned to each of the plurality of vendor, extracted from the external data; and

g) a market reputation score (MRS) derived from a sentiment score calculated from marker news information, obtained from the external data, using Natural Language Processing (NLP);

normalizing, the plurality of scores on a predefined scale;

dynamically assigning weightage, to each of the normalized plurality of scores at each of the plurality of levels to generate a plurality of weighted scores based on one of (i) a preset weightage criterion, and (ii) dynamically defined user weights for each of the plurality of scores;

assessing, each of the plurality of vendors by determining a multi-dimensional reliability score for each of the plurality of vendors at each of the plurality of levels by aggregating the plurality of weighted scores; and

selecting, one or more vendors from the plurality of vendors for an item of interest based on a reliability score criteria in accordance with a level of interest from among the item level, the item-category level, the department level, and the organizational level.

System<u>100</u>

Processor(s) <u>104</u>

I/O Interface(s) <u>106</u>

Memory <u>102</u>

Database <u>108</u>

Modules <u>110</u>

FIG. 1A

System 100

Vendor
data

Internal
data

external
data

popularity score (POPS)
pricing score (PRS)
timeliness score (TS)

sustainability score (SS)
financial score (FS)
compliance score (CS)
Market reputation score
(MRS)

Compute multi-dimensional
reliability score
based on weighted average of
all scores

FIG. 1B

200

Obtaining vendor data comprising (i) internal data providing PO line level data details of a plurality of vendors engaged with an entity for providing a plurality of items within each of a plurality of categories identifying unique items supplied, quantities, and order dates for individual PO's and (ii) external data associated with the plurality of vendors providing analysis of each of the plurality of vendors at global level

202

Determining vendor-to-item mapping information, vendor-to-item category mapping information and vendor to department mapping information for each of the plurality of vendors for each of the plurality of items in each of the plurality of categories by processing the vendor data post performing data validation

204

Computing a plurality of scores for each of the plurality of vendors by processing the vendor-to-item mapping information, the vendor-to-category mapping information, and the vendor to department mapping information at a plurality of levels to generate the plurality of scores at an item level, an item category level, a department level and an entity level, the plurality of scores comprising POPS, PRS, TS, SS, CS, FS, MRS

206

Ⓐ

FIG. 2A

200

(A)

Normalizing the plurality of scores on a predefined scale ⟋208

Dynamically assigning weightage to each of the normalized plurality of scores at each of the plurality of levels to generate a plurality of weighted scores based on one of (i) a preset weightage criteria, and (ii) dynamically defined user weights for each of the plurality of scores ⟋210

Assessing each of the plurality of vendors by determining a multi-dimensional reliability score for each of the plurality of vendors at each of the plurality of levels by aggregating the plurality of weighted scores ⟋212

Selecting one or more vendors from the plurality of vendors for an item of interest based on a reliability score criteria in accordance with a level of interest from among the item level, the item-category level, the department level and the organizational level ⟋212

FIG. 2B

| Feature No. | Feature Group | Range | Feature Description |
|---|---|---|---|
| 1 | | 30 | Quantity SOB in last 1 month |
| 2 | | 20 | Quantity SOB in last 3 month |
| 3 | FG1 | 30 | Dollar SOB in last 1 month |
| 4 | | 20 | Dollar SOB in last 3 month |
| 5 | | 20 | Frequency SOB in last 1 month |
| 6 | | 10 | Frequency SOB in last 3 months |
| 7 | | 20 | Quantity SOB in last 6 months |
| 8 | | 10 | Quantity SOB in last 12 months |
| 9 | FG2 | 16 | Dollar SOB in last 6 months |
| 10 | | 8 | Dollar SOB in last 12 months |
| 11 | | 12 | Frequency SOB in last 6 months |
| 12 | | 6 | Frequency SOB in last 12 months |
| 13 | | 4 | QoQ increase/decrease Qty SOB from last quarter |
| 14 | FG3 | 6 | Mom increase/decrease Qty SOB from last month |
| 15 | | 4 | MoM increase/decrease of Dollar SOB from last Quater |
| 16 | | 6 | MoM increase/decrease of Dollar SOB from last month |

FIG. 3A

| Feature Group | Feature Level Score | Feature Level Value |
|---|---|---|
| Quantity SOB in last 1 month | 30 | 30 |
| Quantity SOB in last 3 months | 20 | 20 |
| Dollar SOB in last 1 month | 30 | 30 |
| Dollar SOB in last 3 months | 20 | 20 |
| Frequency SOB in last 1 month | 10 | 20 |
| Frequency SOB in last 3 months | 5 | 10 |
| Therefore, FGI Level Score | 19.17 | 21.67 |

FIG. 3B

| | Contribution Factor | | | |
|---|---|---|---|---|
| | 2 | 1.5 | 1 | 0.5 |
| Number of Bins in Score Distribution with population > 1% | >=9 | >=7 | >=5 | <5 |
| Number of Bins in Score Distribution with population > 5% | >=6 | >=5 | >=4 | <4 |
| Peak of score distribution | At the mean of 5 | At either 4 or 6 | At either 3 or 7 | At 0,1,2,8,9 |
| Tail bins 0,1,2,8,9 have Population Percent | <=25% | <=35% | <=45% | >45% |
| Correlation of > 50 % for SOB qty and price of all durations | If both | if only long term | If half long term and half short term | None |

FIG. 3C

| Parameter No. | Parameter Acronym | Feature Description |
|---|---|---|
| 1 | VP(i) | Mean price of item by the vendor for each month for last 1 year |
| 2 | LP(i) | Lowest price of item by any vendor for each month for last 1 year |
| 3 | Hp(i) | Highest price of item by any vendor for each month for last 1 year |

**FIG. 4A**

| Month | Mean Price of Vendor | | | HP | LP |
|---|---|---|---|---|---|
| | VI | V2 | V3 | | |
| m1 | 90 | 91 | | 100 | 89 |
| m2 | | 80 | | 80 | 80 |
| m3 | | 75 | | 75 | 75 |
| m4 | | | 89 | 95 | 84 |
| m7 | | | 85 | 80 | 90 |
| m8 | 91 | | | | |
| m10 | | | 89 | 89 | 89 |
| m11 | | 87 | 91 | 92 | 85 |
| m12 | 93 | 85 | 100 | 100 | 85 |

- **Calculation of VI for M1:**
  HP = 100, LP = 89, K = 1
  Score (VIMI) = 10 * [1 -(90—89)/89] = 9.88

- **Calculation of V2 for M2:**
  HP = 100, LP = 80, K = 1
  Score ( V2M2) = 10 * [ 1- (80-80) / 80] = 10

- **Calculation of V3 for M12:**
  HP= 100, LP=85, K = 1
  Score (V3M12) = 10 * [1 -(100-85)/85] = 8.23

- **Overall Score Of V1:**
  Overall Score(VS1)
  = (V1M1 + V1M8 + V1M12) /3

**FIG. 4B**

| | Contribution Factor | | | |
|---|---|---|---|---|
| | 2 | 1.5 | 1 | 0.5 |
| Number of Bins in Score Distribution with population > 1% | >=9 | >=7 | >=5 | <5 |
| Number of Bins in Score Distribution with population > 5% | >=6 | >=5 | >=4 | <4 |
| Peak of score distribution | At the mean of 5 | At either 4 or 6 | At either 3 or 7 | At 0,1,2,8,9 |
| Tail bins 0,1,2,8,9 have Population Percent | <=25% | <=35% | <=45% | >45% |
| Correlation of > 50 % for SOB qty and price of all durations | If both | if only long term | If half long term and half short term | None |

**FIG. 4C**

Illustrative Example:

| Stipulated Delivery Date

PO Date: 11 Oct 2019

Vendor: A, Item: X                                    Target: 0 (Within Time by 0 days)

PO Date: 03 Feb 2019

Vendor: B, Item: Y                                    Target: 1 (Delayed by 54 days)

PO Date: 03 Feb 2020

Vendor: B, Item: Z                                    Target: 0 (Within Time 15 days)

PO Date: 19 Aug 2020                    Target: 1 (Delayed by 24 days)

Vendor: C, Item: X

OBSERVATION PERIOD:                                  PERFORMANCE PERIOD:
- Duration prior to PO Date                          - Duration taken for Delivery
- Generate features based on this period             - Decide Target (Within Time or Delayed – 0 or 1)
                                                     - Delivery Lead Duration

FIG. 5A

**Diverse features generation to ensure all different dimensions are covered**

| Vendor & Item Profile | Delivery Timeliness of Same Item (last 1, 3, 6, 12, ..., N months) | Delivery Timeliness of Other Items (last 1, 3, 6, 12, ..., N months) | Comparison with Other Vendors (last 1, 3, 6, 12, ..., N months) |
|---|---|---|---|
| Association with Vendor (in years months) | Qty, Pct. of items delivered timely | Qty, Pct. of items delivered timely | Avg Delay Duration of same item by other vendors |
| Item Category/Segment | Qty, Pct. of Items delayed | Qty, Pct. of Items delayed | Avg. Delivery Duration of same item by other vendors |
| Avg. Business done with vendor monthly/annually | Avg Delay/Early Duration of Delivery | Avg Delay/Early Duration of Delivery | |

**FIG. 5B**

Actual vs Predicted

FIG. 5C

FIG. 5D

Fetch News

News API
Vendor

Summarized
Article

Calculate

Sentiment

Sentiment
Score

Sentiment
Polarity

Extract
Summary

O O O

Generate
MRS
Score

Perform
Co-reference
Resolution
(neuralcoref)

Fetch

Response

Final MRS
Score
(0-10)

JSON Response

FIG. 6

Europäisches
Patentamt

European
Patent Office

Office européen
des brevets

## EUROPEAN SEARCH REPORT

Application Number

EP 24 15 3605

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/362397 A1 (PSOTA JAMES RYAN [US] ET AL) 28 November 2019 (2019-11-28) * paragraphs [0019], [0027] - [0031], [0040], [0048], [0134], [0137], [0218], [0255], [0265], [0410]; claims 1, 4; figures 2, 19 * * paragraphs [0230] - [0231] * ----- | 1-15 | INV. G06Q10/0639 |
| X | US 2016/086122 A1 (SAXENA AVNEET [IN] ET AL) 24 March 2016 (2016-03-24) * paragraphs [0008], [0015], [0026]; claim all; figure all * ----- | 1-15 | |
| X | US 2023/031627 A1 (RAMASAMY THIYAGARAJAN [IN] ET AL) 2 February 2023 (2023-02-02) * claim all; figure all * ----- | 1-15 | |

**TECHNICAL FIELDS SEARCHED (IPC)**

G06Q

The present search report has been drawn up for all claims

| Place of search | Date of completion of the search | Examiner |
|---|---|---|
| Munich | 17 June 2024 | Diaz Calvo, Sonia |

EPO FORM 1503 03.82 (P04C01)

## ANNEX TO THE EUROPEAN SEARCH REPORT
## ON EUROPEAN PATENT APPLICATION NO.

EP 24 15 3605

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2024

| Patent document cited in search report | Publication date | Patent family member(s) | Publication date |
|---|---|---|---|
| US 2019362397 A1 | 28-11-2019 | US 2015073929 A1 <br> US 2018276728 A1 <br> US 2019362397 A1 | 12-03-2015 <br> 27-09-2018 <br> 28-11-2019 |
| US 2016086122 A1 | 24-03-2016 | NONE | |
| US 2023031627 A1 | 02-02-2023 | NONE | |

EPO FORM P0459

For more details about this annex : see Official Journal of the European Patent Office, No. 12/82

**REFERENCES CITED IN THE DESCRIPTION**

**Patent documents cited in the description**

- IN 202321008585